# EUROPEAN PATENT SPECIFICATION

(11) **EP 4 479 497 B1**
(45) Date of publication and mention of the grant of the patent: **08.04.2026**
(21) Application number: 23708523.8
(22) Date of filing: 16.02.2023
(51) Int. Cl.: C10L 3/00, C01B 3/24, C01B 3/34, C01B 32/40, C10J 3/00

(54) **METHOD FOR CONVERSION OF CARBON DIOXIDE INTO A FUEL GAS**
VERFAHREN ZUR UMWANDLUNG VON KOHLENDIOXID IN EIN BRENNGAS
PROCÉDÉ DE CONVERSION DE DIOXYDE DE CARBONE EN UN GAZ COMBUSTIBLE

(30) Priority: 17.02.2022 FI 20225144
(43) Date of publication of application: 25.12.2024
(73) Proprietor: Dimodi Energy Oy, 00640 Helsinki (FI)
(72) Inventor: RAUTIO, Antti, Helsinki 00640 (FI); TANG, Ligang, Haidian, Beijing (CN)
(74) Representative: Bayramoglu et al.
(86) International application number: PCT/FI2023/050096
(87) International publication number: WO 2023/156712

(56) References cited:
- WO-A1-2009/079681
- WO-A1-2013/004391
- WO-A1-2013/091878
- US-A- 4 040 976
- US-A1- 2009 156 695
- US-A1- 2021 008 496

## Description

### TECHNICAL FIELD

The invention is concerned with a method for the conversion of carbon dioxide into a fuel gas.

### BACKGROUND

Recovery and utility of carbon dioxide are important for the deceleration of climate change. The proportion of carbon dioxide in the atmosphere has increased from having been 320 ppm in the seventies up to 420 ppm today, the main reason being the emission of fossil fuels into the atmosphere.

New methods for the recovery and utility of carbon dioxide have therefore been developed but most of them are still in the stage of research.

One type of those methods is the conversion of carbon dioxide into fuel gas, but they are not economically profitable being up to twice as expensive as other methods for producing electricity.

These methods for producing fuel gas are, however, interesting, not only because the availability of renewable synthetic fuels would decrease the dependence on fossil fuels, but there is a lot of available carbon dioxide to be taken from the industry or directly from the atmosphere, and it is easy to handle. The carbon dioxide molecule is, however, very stable being chemically inert, and its reactions are very energy-consuming.

Different methods for the conversion of carbon dioxide into synthetic fuel gas exist, such as producing methane biologically or catalytically or by conversion of carbon dioxide and hydrogen to synthetic gas and thereafter producing hydrogen carbons with the Fischer-Tropsch method.

All these methods are, however, very energy-consuming in that they require a separate production of hydrogen for example by electrolysis, which also is very expensive to carry out. This far, also the production plants for producing the synthetic gas are energy consuming.

WO 2013/004391 A discloses a process for the production of a synthesis gas, wherein methane and carbon dioxide are introduced into a reaction space and converted to hydrogen and carbon monoxide in the presence of a carbon-containing solid.

The object of the invention is an improved method to produce fuel gas from carbon dioxide.

### SUMMARY

The method of the invention for conversion of carbon dioxide to a fuel gas comprises the steps of feeding carbon dioxide, an alkane, and carbon as reactants into a rector, heating the reactor into a temperature for pyrolysis to take place, whereby a fuel gas containing carbon monoxide, hydrogen, and methane, is obtained as a reaction product, wherein the alkane is octacosane.

The preferable embodiments of the invention have the characteristics of the sub-claims.

Thus, the alkane used for the pyrolysis is octacosane, which is a paraffin hydrocarbon C₂₈H₅₈.

The chemical compounds involved are thus carbon dioxide, octacosane, and carbon, preferably biocarbon, fed as input and carbon monoxide, hydrogen, and methane obtained as output:

CO₂ + (C₂₈H₅₈ + C) → CO + H₂ + CH₄

The heating of the reactor is performed at a temperature of 700°C - 1000°C, preferably 700°C - 800°C.

When the temperature has been raised to about 400°C, the disintegration of reactants starts, in other words, the gas production starts and continues as long as carbon dioxide is fed, as well as a mix of the alkane and carbon in the corresponding proportion, i.e. 1,5 - 2% of alkane and carbon in relation to the carbon dioxide.

The method has been carried out in our experiment e.g. by adding 10 g biocarbon (C) and 5 ml octacosane (C₂₈H₅₈) for each kg of carbon dioxide (CO₂). In tests performed, 10 kg of CO₂ produced 10 m³ of fuel gas in one hour at a normal pressure

The reactor used was a cast iron container with an electrical resistance of 2kW or a graphite container with another heating resource. The recovery of the fuel gas production takes place in an intermediate gas container at a pressure of 1 MPa.

Methane (CH₄) has several advantages as a fuel when compared to hydrogen and there is a demand for it since it is already used as a fuel, such as for cars. Neither is methane explosive, like hydrogen gas (H₂), and it is easier to store.

The fuel gas obtained from the methane is a mixture of carbon monoxide (CO), hydrogen (H₂), and methane (CH₄). The hydrogen can be separated from the obtained fuel gas if desired.

A performed example of the method of the invention are presented in the following.

### EXAMPLE

Carbon dioxide (CO₂) was fed from a gas bottle into a reactor heated to a temperature of 700°C with a feed rate of 10kg per hour.

A mix of 50 g of liquid octacosane and 100g of carbon was prepared by means of a mixer.

The mix of 150g of the mix of 50g octacosane (C₂₈H₅₈) and 100g of biocarbon (C) was fed as a mix from a container into the same reactor by means of a screw charger. The proportions of the carbon dioxide were 1kg CO₂ per 15g of said mix.

After a reaction time of 1h, a reaction product of fuel gas that contained carbon monoxide (CO), hydrogen (H₂), and methane (CH₄) was recovered in a gas container. Thereafter it can be fed for producing electricity for e.g. a gas turbine.

At recovery, the produced fuel gas burns with a flame with a colour that varies from red to blue depending on the reaction temperature. Since CO₂ has a cooling effect, the reaction temperature might somewhat vary but in ideal conditions in a temperature of 700 - 800°C, the fuel gas is pure and the colour of the flame turns blue.

The colour of the flame depends on the purity of the gas - if there is much dust contained, the flame is reddish - with a small amount of dust, the flame is bluish.

In the following the invention is described by means of a referable embodiment by referring to a figure.

### FIGURE

The figure is a schematic view of the reaction plant used in the method of the invention.

### DETAILED DESCRIPTION

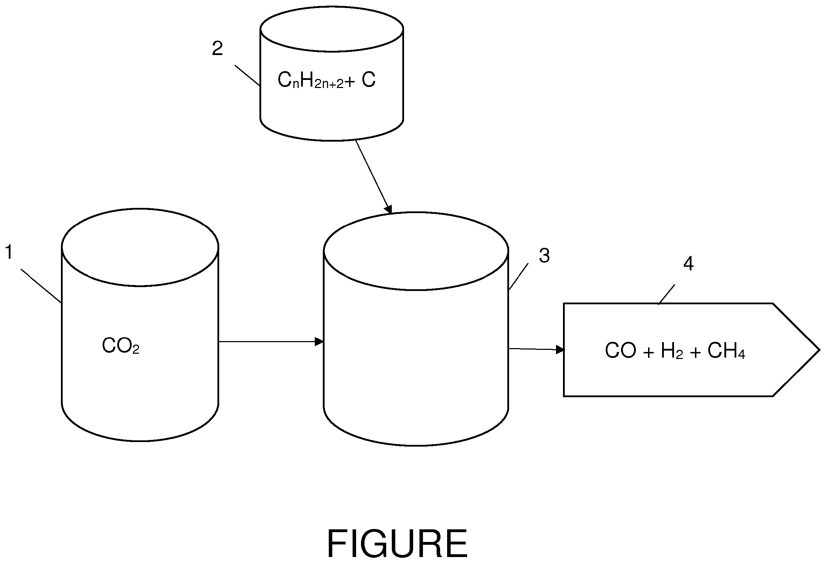

Figure 1 is a schematic view of the reaction plant used in the method of the invention.

In the method of the invention, carbon dioxide is converted to a fuel gas by feeding carbon dioxide (CO₂) from a container or tank 1 to a reactor 3, which has been heated to a temperature over 700°C, sufficient for pyrolysis to take place between the reactants.

An alkane CₙH₂ₙ₊₂, which is octacosane (C₂₈H₅₈), is fed mixed together with biocarbon (C) from another container 2 having a mixer into the same reactor 3.

A fuel gas containing carbon monoxide (CO), hydrogen (H₂), and methane (CH₄), is obtained as a reaction product, which is recovered in a gas container 4.

The preferable embodiments of the invention have the characteristics of the sub-claims. Thus, the alkane used for the pyrolysis is octacosane, which is a solid paraffin hydrocarbon C₂₈H₅₈.

## Claims

1. A method of converting carbon dioxide to a fuel gas, the method comprising the steps of feeding carbon dioxide, and carbon into a rector (3), heating the reactor (3) into a temperature for pyrolysis to take place, whereby a fuel gas containing carbon monoxide, hydrogen, and methane, is obtained as a reaction product, **characterized by** the method further comprising feeding an alkane into the reactor (3), wherein the alkane is octacosane.

2. The method according to claim 1, wherein the carbon is biocarbon.

3. The method according to claim 1 or 2, wherein the heating of the reactor is performed to a temperature of 700° C - 1000° C, preferably 800° C.

4. The method according to any of claims 1 - 3, wherein said carbon dioxide (CO2) is fed from one container or tank (1) to the reactor (3), and said alkane is fed mixed together with biocarbon (C) from another container (2) having a mixer into the same reactor (3).

## Patentansprüche

1. Verfahren zur Umwandlung von Kohlendioxid in ein Brenngas, wobei das Verfahren die Schritte umfasst, Kohlendioxid und Kohlenstoff in einen Reaktor (3) einzuspeisen, den Reaktor (3) auf eine Temperatur zu erhitzen, bei der Pyrolyse stattfindet, wobei als Reaktionsprodukt ein Brenngas erhalten wird, das Kohlenmonoxid, Wasserstoff und Methan enthält, **dadurch gekennzeichnet, dass** das Verfahren ferner das Einspeisen eines Alkans in den Reaktor (3) umfasst, wobei das Alkan Octacosan ist.

2. Verfahren nach Anspruch 1, wobei der Kohlenstoff Biokohlenstoff ist.

3. Verfahren nach Anspruch 1 oder 2, wobei das Erhitzen des Reaktors auf eine Temperatur von 700 °C bis 1000 °C durchgeführt wird, vorzugsweise 800 °C.

4. Verfahren nach einem der Ansprüche 1-3, wobei das Kohlendioxid (CO₂) aus einem Behälter oder Tank (1) in den Reaktor (3) eingespeist wird und das Alkan gemischt zusammen mit Biokohlenstoff (C) aus einem weiteren Behälter (2) mit einem Mischer in denselben Reaktor (3) eingespeist wird.

## Revendications

1. Procédé de conversion de dioxyde de carbone en un gaz combustible, le procédé comprenant les étapes consistant à introduire du dioxyde de carbone et du carbone dans un réacteur (3), chauffer le réacteur (3) jusqu'à une température telle que la pyrolyse puisse avoir lieu, moyennant quoi un gaz combustible contenant du monoxyde de carbone, de l'hydrogène et du méthane est obtenu comme produit de réaction, **caractérisé en ce que** le procédé comprend en outre l'introduction d'un alcane dans le réacteur (3), dans lequel l'alcane est de l'octacosane.

2. Procédé selon la revendication 1, dans lequel le carbone est du biocarbone.

3. Procédé selon la revendication 1 ou 2, dans lequel le chauffage du réacteur est effectué à une température de 700°C-1 000°C, de préférence 800°C.

4. Procédé selon l'une des revendications 1-3, dans lequel ledit dioxyde de carbone (CO₂) est introduit à partir d'un récipient ou d'un réservoir (1) dans le réacteur (3), et ledit alcane est introduit en mélange avec du biocarbone (C) provenant d'un autre récipient (2) présentant un mélangeur dans le même réacteur (3).
